# DEMANDE DE BREVET EUROPEEN

(11) **EP 4 015 087 A1**
(43) Date de publication de la demande: **22.06.2022**
(21) Numéro de dépôt: 21211120.7
(22) Date de dépôt: 29.11.2021
(51) Int. Cl.: B03C 3/16, B03C 3/32, B03C 3/53, G01N 1/22

(54) **DISPOSITIF DE COLLECTE ET D'ANALYSE DE PARTICULES AÉROPORTÉES**

(30) Priorité: 21.12.2020 FR 2013772
(71) Demandeur: Commissariat à l'énergie atomique et aux énergies alternatives, 75015 Paris (FR)
(72) Inventeur: ROUX, Jean-Maxime, 38054 GRENOBLE CEDEX 09 (FR); ALESSIO, Manuel, 38054 GRENOBLE CEDEX 09 (FR); BAQUE, Melissa, 38054 GRENOBLE CEDEX 09 (FR); TROUILLON, Raphaël, 38054 GRENOBLE CEDEX 09 (FR)
(74) Mandataire: INNOV-GROUP

(57) **Abrégé**

L'invention concerne un dispositif de collecte de particules (P) présentes dans un gaz ou mélange de gaz, comprenant un composant (1), une zone de collecte (Z1) disposée sur le composant, sur laquelle viennent se déposer lesdites particules (P), des moyens de collecte configurés pour forcer lesdites particules (P) à se déposer contre la zone de collecte (Z1), un circuit fluidique d'élution agencé dans ledit composant pour éluer les particules présentes dans la zone de collecte.

## Description

### Domaine technique de l'invention

La présente invention se rapporte à un dispositif de collecte et d'analyse de particules dispersées dans un aérosol, et à un procédé de collecte et d'analyse mis en oeuvre à l'aide du dispositif.

### Etat de la technique

Plusieurs solutions ont déjà été proposées dans l'état de la technique pour collecter des particules présentes dans un aérosol.

La collecte des particules présentes dans un aérosol peut notamment être réalisée dans un but d'analyse.

Une méthode de séparation connue et particulièrement avantageuse est de type électrostatique. Elle est mise en œuvre dans des collecteurs électrostatiques, aussi appelés précipitateurs électrostatiques ou encore filtres électrostatiques (ESP pour *"electrostatic precipitator"* en anglais)

Il existe plusieurs catégories de collecteurs électrostatiques, parmi lesquelles :
- Les collecteurs électrostatiques dits secs, par exemple décrits dans la demande de brevet WO2015/197747A1,
- Les collecteurs électrostatiques dits humides, par exemple décrits dans la demande de brevet WO2004/041440A1**,**
- Les collecteurs électrostatiques dits semi-humides, par exemple décrits dans WO2007/012447A1.

Dans toutes ces catégories, les collecteurs comportent une chambre dans laquelle est injecté ou aspiré un flux d'air contenant les particules et génèrent un champ électrique entre deux électrodes, une électrode de décharge et une contre-électrode dite de collecte, qui est en règle générale reliée à la masse.

Dans la première catégorie des collecteurs électrostatiques dits secs, appelés également électrofiltres, le champ électrique créé entre les deux électrodes génère un flux d'ions à partir d'une poche de gaz ionisée entourant l'électrode de décharge. Le flux d'air contenant les particules est injecté à travers le flux d'ions. En présence d'ions, les particules acquièrent des charges électriques et deviennent ainsi sensibles au champ électrique généré entre les deux électrodes et sont entraînées par la force électrique vers la contre-électrode. Les particules collectées sont décrochées des électrodes de collecte par un procédé sec, par exemple en mettant les électrodes en vibration ou encore par les frottements mécaniques de brosses sur leur surface.

Dans la deuxième catégorie des collecteurs électrostatiques dits humides, les particules capturées sur les électrodes de collecte sont évacuées par ruissellement d'eau sur celles-ci.

Dans la troisième catégorie des collecteurs électrostatiques dits semi-humides, de la vapeur d'eau est introduite dans la chambre contenant l'électrode de décharge ou en amont de celle-ci. Les particules en suspension dans l'air croissent alors par nucléation hétérogène pour former des gouttelettes et lesdites gouttelettes sont précipitées sur la contre-électrode par la force électrique. La vapeur introduite peut en outre condenser sur les parois et ainsi conduire à un ruissellement sur l'électrode de collecte qui contribue à l'évacuation des particules capturées.

Les solutions antérieures ne sont pas forcément satisfaisantes pour les raisons suivantes :
- Elles ne sont pas toujours adaptées pour être réalisées et utilisées sous la forme d'un dispositif portable et compacte ;
- Elles nécessitent souvent une intervention humaine et ne sont pas forcément aisées à automatiser, que ce soit au niveau de la collecte ou de l'analyse ;
- Elles ne sont pas forcément totalement autonomes ;

La publication référencée *"*Hyeong Rae Kim, Sanggwon An, and Jungho Hwang, Aerosol-to-Hydrosol Sampling and Simultaneous Enrichment of Airborne Bacteria For Rapid Biosensing, ACS Sens. 2020, 5, 2763-2771*"* décrit un collecteur électrostatique destiné à collecter des bio-particules dans un flux d'air. Le flux d'air est injecté dans un canal et passe entre deux électrodes. Les particules sont attirées vers l'électrode de collecte. Un liquide est injecté en continu pour éluer les particules capturées sur l'électrode de collecte. Cette solution nécessite notamment un flux de liquide continu pour éluer les particules présentes sur l'électrode de collecte, ce qui rend la solution peu adaptée pour être facilement transportable et autonome.

Par ailleurs, on a constaté qu'il fallait veiller à bien choisir les matériaux utilisés pour la collecte des particules, notamment en cas d'analyse ultérieure réalisée sur les particules collectées. Tous les matériaux employés doivent en effet répondre à des critères de compatibilité avec les différentes techniques d'analyse biologique, ce qui rend leur choix non trivial.

Le brevet EP1112124B1 décrit par exemple une membrane de collecte destinée à être employée dans un collecteur électrostatique pouvant être sec ou humide. Ce document propose différentes compositions de membrane. Il décrit l'emploi d'une membrane faite de fibres entrelacées qui peuvent être faite de céramique, de métaux ou d'alliages métalliques, de carbone.

La solution technique décrite dans ce brevet est intéressante mais sa mise en œuvre dans un collecteur de particules aéroportées en vue d'analyses biologiques pose un certain nombre de problèmes. Il est par exemple connu que de nombreux métaux, comme par exemple l'aluminium, ont tendance à inhiber les analyses biomoléculaires. Des métaux comme le cuivre ont des propriétés désinfectantes, ce qui le rend peu utilisable dans le domaine de la culture biologique.

Une solution intéressante est l'emploi de matériaux conducteurs non métalliques comme le carbone ou comme des polymères pourvu qu'ils soient conducteurs et que leurs composants n'interagissent pas avec les réactions d'analyses biologiques. Les matériaux à base de PEDOT (poly(3,4-éthylènedioxythiophène) bien connus dans l'état de la technique pourraient être intéressants mais leur emploi pour des analyses biologiques s'avère plus compliqué que prévu. En effet, pour être exploitables dans un collecteur destiné aux analyses biologiques, les solvants employés lors de leur préparation doivent être éliminés par des procédés spécifiques.

Enfin les matériaux à base de carbone et des polymères conducteurs tels que le PEDOT:PSS sont trop hydrophobes et ne permettent pas de faire en sorte que la solution de rinçage pénètre suffisamment la membrane.

La matrice silicone décrite dans le brevet EP1112124B1 précité est également par nature hydrophobe. Si un rinçage à l'eau est toujours possible pour nettoyer la membrane peu importe que son matériau soit hydrophile ou non, un autre problème vient de la quantité d'eau nécessaire en vue d'analyses biologiques. Dans ce cadre, les volumes doivent en effet être minimisés et si possible inférieur à 5ml avec un volume préféré inférieur à 300µl/cm².

On comprend de ce qui précède que le but de l'invention de disposer d'un dispositif de collecte et d'analyse de particules aéroportées qui :
- Puisse fonctionner à sec pour éviter la présence d'eau lors des décharges électrostatiques, susceptibles de former de nombreuses espèces très réactives telles que l'ozone. Or l'ozone en présence d'une solution aqueuse conduit à la formation de peroxyde d'hydrogène qui pourrait altérer les cibles à détecter et inhiber les réactions d'analyse réalisées ultérieurement ;
- Utilise des matériaux de collecte biocompatibles et adaptés à des analyses ultérieures ;
- Utilise une composition suffisamment hydrophile pour faciliter l'élution ;
- Utilise de faibles volumes d'eau lors de l'élution ;
- Soit facilement transportable, déployable et autonome ;

La solution pourra notamment permettre d'enchainer automatiquement des tests. Elle pourra être particulièrement compacte et avantageusement peu bruyante pour être employée sous la forme de balises autonomes déployées dans des environnements critiques, par exemple dans le milieu hospitalier.

Le dispositif pourra avantageusement se présenter sous la forme d'un élément consommable, facile à déployer et à remplacer après un cycle de collecte et d'analyse.

### Exposé de l'invention

Ce but est atteint par un dispositif de collecte et d'analyse comprenant un composant monobloc intégrant une unité de collecte de particules et une unité d'analyse des particules collectées, l'unité de collecte comprenant une zone de collecte disposée sur le composant, sur laquelle viennent se déposer lesdites particules, des moyens de collecte configurés pour forcer lesdites particules à se déposer contre la zone de collecte, un circuit fluidique d'élution agencé dans ledit composant pour éluer les particules présentes dans la zone de collecte, le dispositif étant caractérisé en ce que :
- Les moyens de collecte comportent au moins un canal de collecte réalisé dans le composant et comprenant une entrée et une sortie pour être traversé par un flux du gaz ou mélange de gaz contenant les particules, ledit canal de collecte étant agencé pour traverser ladite zone de collecte,
- La zone de collecte est réalisée dans un matériau hydrophile,
- Le circuit fluidique d'élution comporte un premier canal fluidique débouchant sur la zone de collecte,
- L'unité d'analyse comporte une chambre de détection intégrée dans ledit composant, et agencée pour recueillir un liquide drainé par la zone de collecte lors de l'élution.

Le dispositif de l'invention réalise une collecte à sec des particules lors d'une étape de collecte réalisée dans le composant. Une étape d'élution réalisée dans le même composant succède à l'étape de collecte pour éluer les particules à destination de l'unité d'analyse. L'étape d'analyse est ensuite menée, toujours dans le même composant.

Selon une réalisation préférée, la zone de collecte est réalisée sur une membrane indépendante réalisée dans ledit matériau hydrophile, déposée sur une surface du composant.

Selon une particularité, la membrane est réalisée dans un matériau à base de cellulose ou dans un matériau de type tissu.

Selon une réalisation particulière, les moyens de collecte sont de type électrostatique et comprennent une électrode de décharge et une électrode de collecte, la membrane étant traitée pour être rendue conductrice de l'électricité et former ladite électrode de collecte.

Selon une autre particularité, la membrane est agencée pour tapisser au moins partiellement la paroi interne du canal de collecte.

Selon une autre particularité, l'électrode de décharge est formée d'une pointe s'étendant dans l'axe dudit canal de collecte.

Selon une autre particularité, la zone de collecte est recouverte d'un matériau hydrosoluble.

Selon une autre réalisation particulière, les moyens de collecte comportent une unité de génération d'un flux du gaz ou mélange de gaz et la membrane est agencée dans un plan transversal au flux de gaz ou mélange de gaz pour piéger les particules.

Selon une autre réalisation particulière, les moyens de collecte comportent une unité de génération d'un flux du gaz ou mélange de gaz à travers une buse et la membrane est agencée en vis-à-vis de la buse pour collecter les particules par impaction.

L'invention concerne également un procédé de collecte et d'analyse de particules présentes dans un aérosol, le procédé étant mis en œuvre à l'aide du dispositif tel que défini ci-dessus, le procédé comportant :
- Une étape de collecte des particules réalisée dans la zone de collecte de ladite unité de collecte,
- Une étape d'élution par injection d'un liquide dans le circuit fluidique d'élution, pour éluer les particules piégées dans la zone de collecte lors de l'étape de collecte,
- Une étape de récupération du liquide drainé par la zone de collecte dans l'unité fluidique de récupération,
- Une étape d'analyse des particules dans l'unité d'analyse.

La récupération peut être réalisée dans ledit réceptacle et l'analyse dans ladite chambre de détection, ces étapes étant mise en œuvre dans le même composant.

### Brève description des figures

D'autres caractéristiques et avantages vont apparaître dans la description détaillée qui suit faite en regard des dessins annexés dans lesquels :
- La figure 1 représente de manière schématique le dispositif de collecte conforme à l'invention et illustre son principe de fonctionnement ;
- La figure 2A et la figure 2B représentent un premier mode de réalisation du dispositif de collecte de l'invention ;
- La figure 3A et la figure 3B illustrent le principe de fonctionnement de ce premier mode de réalisation du dispositif de collecte de l'invention ;
- La figure 4A et la figure 4B représentent un deuxième mode de réalisation du dispositif de collecte de l'invention ;
- La figure 5A et la figure 5B illustrent le principe de ce deuxième mode de réalisation du dispositif de collecte de l'invention ;
- La figure 6 représente une autre variante de réalisation du dispositif de collecte de l'invention ;
- La figure 7 représente une autre variante de réalisation du dispositif de collecte de l'invention ;

Sur les figures annexées, l'étape de collecte est référencée E1 et l'étape de récupération par élution est référencée E2.

### Description détaillée d'au moins un mode de réalisation

L'invention vise à collecter des particules P présentes dans un aérosol et éventuellement à analyser les particules ainsi collectées.

Les particules peuvent être des micro-particules ou des nano-particules présentes dans l'aérosol.

De manière non limitative, la collecte des particules P peut notamment être réalisée dans l'air ambiant ou dans l'air expiré par un être vivant. Dans la suite de la description, on considérera que la collecte des particules est réalisée dans l'air ambiant.

L'un des objectifs est d'analyser les particules en vue de détecter la présence d'un agent pathogène ou une trace de sa présence, par analyse des particules collectées.

Les agents pathogènes recherchés peuvent être, entre autres, des microorganismes tels que des virus, des bactéries, des spores fongiques, des toxines, des mycotoxines, des allergènes, ou tout autre agent nuisible.

L'analyse peut consister à détecter la présence d'ADN, d'ARN, de protéines, d'éléments composants l'agent pathogène, tels que lipides ou glucides, d'un ou plusieurs agents pathogènes présents dans les particules collectées. L'analyse peut également consister à détecter des molécules telles que l'ATP ou encore des sucres tels que le mannitol, l'arabitol et le glucose qui renseignent sur la présence de microorganismes. L'analyse peut aussi porter sur la détection de molécules telles que des allergènes et des mycotoxines.

A titre d'exemple, la méthode d'analyse peut être de type amplification biomoléculaire (par exemple de type LAMP, RPA, PCR,...) ou de type immuno-enzymatique (par exemple type ELISA).

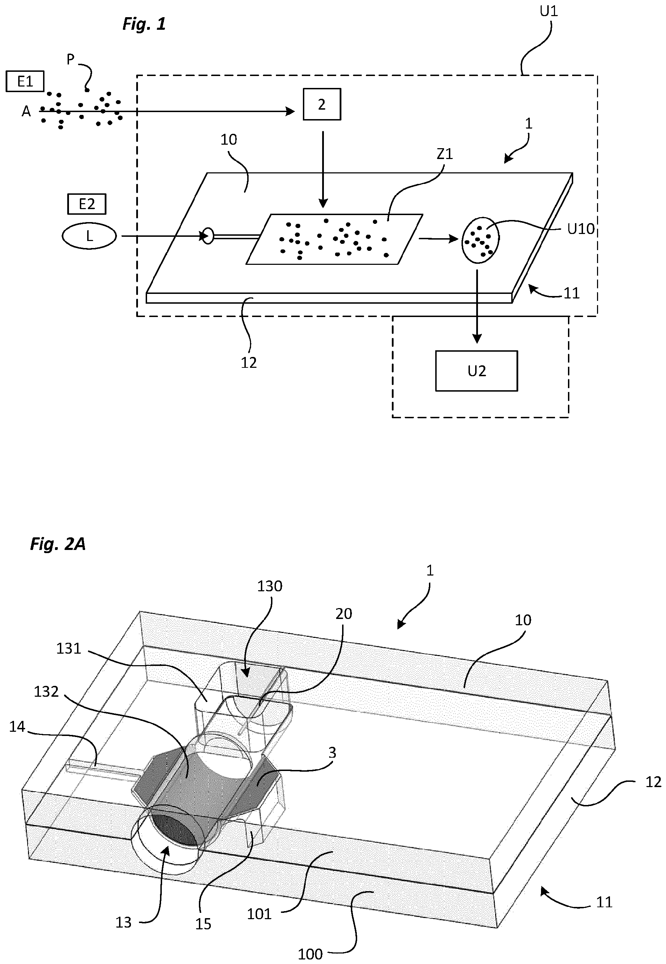

En référence à la figure 1, le dispositif de collecte et d'analyse de particules comporte une unité de collecte U1 de particules et une unité d'analyse U2 des particules collectées.

Le dispositif comporte un composant 1 principal de collecte.

A titre d'exemple, le composant 1 de collecte peut être réalisé dans un matériau de type COP/COC (Cyclo Oléfin Polymère/Cyclo Olefin Copolymère), polycarbonate ou de type PMMA (Poly-méthacrylate de Méthyle). Il peut notamment présenter des caractéristiques de transparence, suffisantes pour une lecture optique lorsque l'analyse est mise en œuvre directement dans le composant.

Le composant 1 peut se présenter sous la forme d'un bloc parallélépipédique, ayant une face supérieure 10, une face inférieure 11 et quatre faces latérales 12.

L'unité de collecte U1 comporte une zone de collecte Z1 arrangée sur une paroi dédiée du composant 1, sur laquelle les particules P sont collectées et des moyens de collecte 2 configurés pour diriger les particules présentes dans l'air vers sa zone de collecte Z1.

De manière non limitative, en référence aux figures 2A à 4B, le composant 1 peut se présenter en deux parties, une base 100 et un capot 101 qui est rapporté sur ladite base 100.

Le composant 1 peut comporter un canal 13 interne de collecte à travers lequel circule l'air à analyser. La circulation de l'air à travers le canal 13 peut être forcée (par exemple à l'aide d'un ventilateur) ou non.

Le canal 13 de collecte peut présenter une entrée 130 débouchant sur la face supérieure 10 du composant 1 et une sortie débouchant sur l'une des faces latérales 12 du composant 1. De manière non limitative, le canal 13 peut ainsi présenter une forme coudée avec son entrée qui débouche dans un puits 131 creusé dans ledit composant 1, ledit puits 131 étant prolongé par un tronçon 132 principal cylindrique vers la sortie latérale du canal.

Selon l'invention, la zone de collecte Z1 est configurée de manière à présenter un caractère hydrophile.

Par caractère hydrophile, on entend que la zone de collecte Z1 est capable de drainer un liquide par capillarité. Pour rappel, on définit la mouillabilité d'un matériau en observant l'angle de contact (le plus souvent noté a) qu'a ce dernier avec une goutte d'eau. Lorsque cet angle (aussi appelé angle de contact, ou angle de raccordement) est inférieur à 90°, la surface est dite plus ou moins hydrophile (la surface de contact entre l'eau et le matériau est élevé) et lorsqu'il est supérieur à 90°, la surface est dite plus ou moins hydrophobe (la surface de contact entre l'eau et le matériau est faible). Dans le cas de l'invention, par caractère hydrophile, on entend que la zone de collecte Z1 présente avantageusement un angle de contact inférieur à 75° après une durée très courte inférieure à quelques secondes, par exemple de 5 secondes. Par ailleurs, pour la zone de collecte Z1, cet angle de contact décroît ensuite très rapidement jusqu'à passer sous 40°, l'eau pénétrant très rapidement dans le matériau. Elle présente donc un caractère très hydrophile.

La zone de collecte Z1 peut être formée d'une micro-structure façonnée dans la paroi d'accueil du composant 1, par exemple par usinage.

La zone de collecte Z1 est avantageusement réalisée sous la forme d'une membrane 3 indépendante fabriquée dans un matériau hydrophile, cette membrane étant déposée sur une surface particulière du composant. Par son caractère hydrophile, on entend que la membrane est capable de drainer un liquide par capillarité, selon la définition donnée ci-dessus.

La membrane 3 peut être fixée sur le composant par tous moyens, par exemple par collage, par exemple en employant un adhésif double-face.

La membrane 3 se présente alors sous la forme d'un substrat fin, plan et souple. La membrane 3 peut se présenter sous la forme d'une bande de matière allongée, s'étendant entre une première extrémité et une deuxième extrémité suivant une direction longitudinale.

La membrane peut notamment être fabriquée dans un matériau fibreux ou alvéolée, pouvant drainer un liquide. A titre d'exemple, elle peut être réalisée dans un matériau à base de cellulose (par exemple papier filtre ou équivalent), dans un matériau de type tissu à caractère hydrophile, de type mousse (éponge) ou de type fibre de verre. Des matériaux peu hydrophiles ou non hydrophiles, par exemple comme le polyéthylène, peuvent également être rendus hydrophiles par un traitement adéquat. Ils peuvent ainsi être employés pour fabriquer la membrane.

A titre d'exemple, la membrane 3 peut disposer d'une longueur de 2cm, d'une largeur de 2cm et d'une épaisseur de 200µm.

De manière avantageuse, la zone de collecte Z1, avantageusement la membrane 3 décrite ci-dessus, peut être recouverte d'un matériau hydrosoluble pour faciliter la récupération des particules collectées. A titre d'exemple, elle peut être traitée avec une solution composée d'un sucre tel que le lactose, le tréhalose ou encore le saccharose qui, en se dissolvant lors de l'élution, facilite l'entrainement des particules collectées par la solution d'élution.

Pour récupérer les particules piégées au niveau de la zone de collecte Z1, l'invention consiste à utiliser les capacités hydrophiles de la zone de collecte Z1, par exemple du matériau qui compose la membrane 3 lorsque la membrane 3 est employée comme zone de collecte Z1.

Dans la suite de la description, la zone de collecte Z1 est décrite comme étant formée de ladite membrane 3, mais il faut comprendre que le principe s'applique pour une zone de collecte Z1 de manière générale, telle que décrite ci-dessus, présentant notamment le caractère hydrophile défini ci-dessus.

Le composant 1 intègre également un circuit fluidique, dit circuit fluidique d'élution. Ce circuit fluidique d'élution comporte avantageusement un premier canal fluidique 14.

Le premier canal fluidique 14 comporte une entrée, par exemple accessible sur une face latérale 12 du composant (distincte de la face latérale de sortie du canal de collecte 13), par laquelle peut être injecté un liquide, par exemple de l'eau, et une sortie débouchant sur la zone de collecte Z1, en particulier sur la membrane 3.

Le circuit fluidique d'élution comporte également une unité fluidique de récupération U10 du liquide drainé par la membrane 3.

L'unité fluidique de récupération U10 du liquide drainé par la membrane 3 peut comporter un réceptacle 15 qui est avantageusement creusé dans le composant 1.

Selon l'invention, un liquide tel que l'eau est injecté par le premier canal 14 du circuit fluidique d'élution. Par capillarité, le liquide assure le mouillage de toute la surface de la membrane 3 et entraine avec lui les particules précédemment collectés. Le liquide drainé par la membrane est récupéré dans l'unité fluidique de récupération U10, par exemple formé du réceptacle 15.

Le réceptacle 15 peut être positionné directement sous au moins une partie de la membrane pour récupérer le liquide injecté. La membrane peut ainsi être appliquée directement contre certains bords du réceptacle.

L'unité fluidique de récupération U10 du liquide peut également comporter un deuxième canal, dit canal sortant, réalisé dans le support. Le canal sortant peut comporter une entrée située à proximité de la membrane 3 pour capter le liquide et une sortie débouchant dans ledit réceptacle 15. Le canal sortant peut être réalisé avec une pente suffisante pour faciliter l'écoulement du liquide vers le réceptacle.

De manière préférentielle, les moyens de collecte 2 des particules peuvent comporter des moyens de type électrostatique.

Les moyens de collecte électrostatique comportent une électrode dite de collecte (contre-électrode en général reliée à la masse) et une électrode de décharge 20. L'électrode de collecte est disposée de façon à former un précipitateur électrostatique, en coopérant avec l'électrode de décharge 20.

L'électrode de décharge 20 peut être formée d'une pointe intégrée au composant et fixée par une première extrémité dans une paroi du composant 1 et s'étendant suivant une direction transversale à l'axe du puits 131 jusqu'à une extrémité libre venant se présenter en vis-à-vis de l'entrée du canal.

A titre d'exemple, la pointe peut être réalisée en acier ou en inox et formée d'un capillaire d'un diamètre interne de 250µm et d'un diamètre externe de 500µm.

L'électrode de collecte est réalisée avantageusement en instrumentant la membrane 3 présente. Le matériau formant la membrane 3 est ainsi modifié pour devenir conducteur électrique.

Dans cette réalisation, la membrane instrumentée est apposée pour tapisser au moins partiellement la paroi interne du tronçon cylindrique du canal 13 de collecte. La membrane 3 peut également comporter deux ailes opposées venant chacune se loger dans un renfoncement adapté ménagé dans le composant, entre sa base 100 et son capot 101. Entre ses deux extrémités, la membrane est disposée sur la paroi interne du canal 13, transversalement à l'axe du canal 13.

Le premier canal 14 est agencé pour déboucher sur une première aile de la membrane et le réceptacle 15 de récupération du liquide drainé par la membrane 3 peut être positionné sous la deuxième aile de la membrane, située à l'opposé de sa première aile. Le premier canal 14 est orienté suivant une direction parallèle à la direction longitudinale de la membrane 3 et découche ainsi au niveau de la première extrémité de la membrane 3.

Dans ce mode de collecte électrostatique, la membrane 3 qui constitue l'électrode de collecte peut être une membrane de cellulose rendue conductrice, par exemple par un traitement à base de polymère conducteur tel que le PEDOT (poly(3,4-éthylènedioxythiophène).

A titre d'exemple, une membrane conductrice peut être fabriquée de la manière suivante. Une membrane en papier filtre type "Whatman 1" (marque déposée) est lavée à l'éthanol et à l'eau puis immergée dans une solution de PEDOT/PSS (1,5-2% dans l'eau) supplémentée de 5% d'éthylène glycol. Après égouttage, le papier est séché à 90°C puis une deuxième couche de PEDOT est déposée selon le même procédé. La conductivité du polymère est ensuite améliorée en imbibant la membrane de diméthylsulfoxyde (avec 2% d'eau), en l'égouttant et en la séchant à 120°C. La membrane peut ensuite être lavée à l'eau à 80°C pendant 15 minutes (3 fois) et traitée avec de l'albumine avant d'être utilisée pour la collecte.

Lorsqu'une différence de potentiels est appliquée entre les deux électrodes, le champ électrostatique ainsi créé entre les deux électrodes, génère un flux d'ions à partir d'une poche de gaz ionisée entourant l'électrode de décharge 20. Ce phénomène est dénommé décharge-couronne. Les particules qui sont présentes entre les deux électrodes acquièrent des charges électriques et deviennent ainsi sensibles au champ électrostatique. Elles sont précipitées par la force électrique sur l'électrode de collecte formée de la membrane 3 et viennent se déposer sur la surface de la membrane 3.

La collecte est réalisée en imposant une différence de potentiels électriques suffisamment élevée entre les deux électrodes. A titre d'exemple, la tension employée est de 8kV à 10kV. Pour stopper la collecte, une tension nulle est imposée entre les deux électrodes.

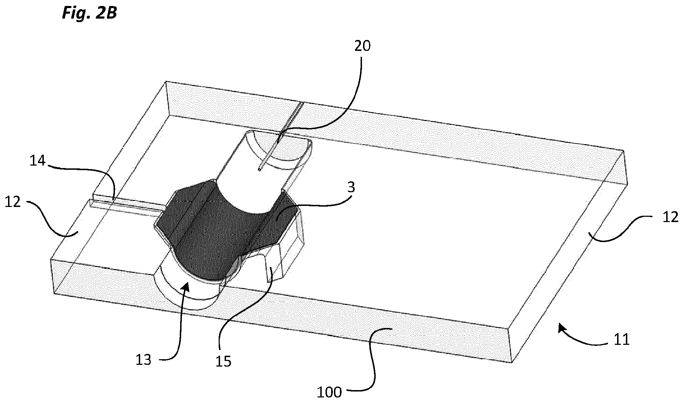

Sur la figure 2A et la figure 2B, l'unité de collecte U1 ne comporte qu'une seule membrane 3 et un seul réceptacle 15 de récupération du fluide. A plat, la membrane 3 présente par exemple une forme générale octogonale, dont certains sommets sont arrondis pour éviter les effets de pointe.

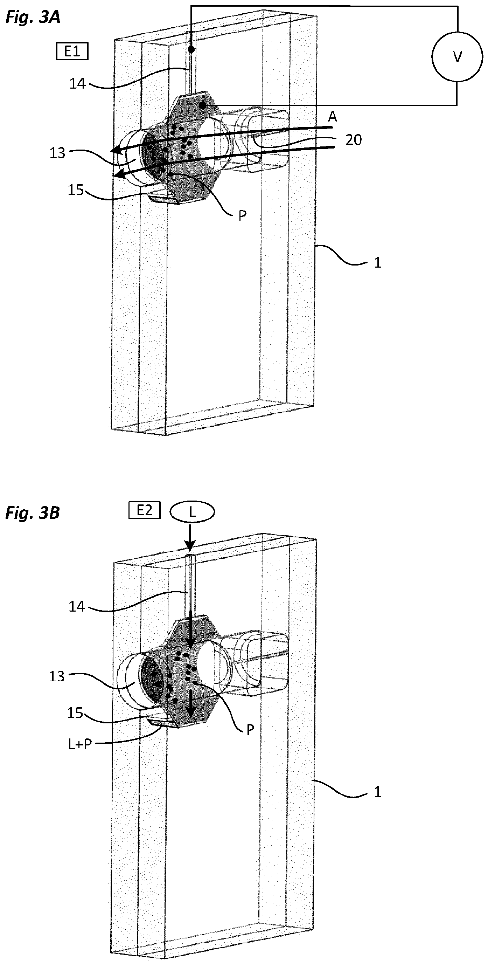

Partant de l'architecture des figures 2A et 2B, les figures 3A et 3B illustrent le principe de collecte des particules P présentes dans l'air A, traversant le canal de collecte 13 (figure 3A - étape E1) et de récupération des particules P collectées par la membrane 3 par élution (figure 3B - étape E2). Dans l'étape E1, une différence de potentiels est appliquée entre les deux électrodes par le générateur V. Les particules P présentes dans le flux d'air A sont attirées vers l'électrode de collecte, formée de la membrane 3. Lors de l'étape E2, le liquide L, par exemple de l'eau, est injecté dans le canal 14 et atteint la membrane 3. Le liquide vient mouiller la membrane 3 et est drainé par la membrane 3 jusqu'au réceptacle 15, en éluant les particules P piégées préalablement par la membrane 3. De manière non limitative et optionnelle, une fois les particules captées par la membrane 3, si ce n'est pas encore le cas, le composant 1 peut être positionné à la verticale, de manière à orienter le premier canal fluidique 14 suivant une direction verticale, et au-dessus de la membrane 3 et faciliter ainsi l'élution des particules par gravité. Le réceptacle 15 est alors positionné au-dessous de la membrane suivant la direction verticale.

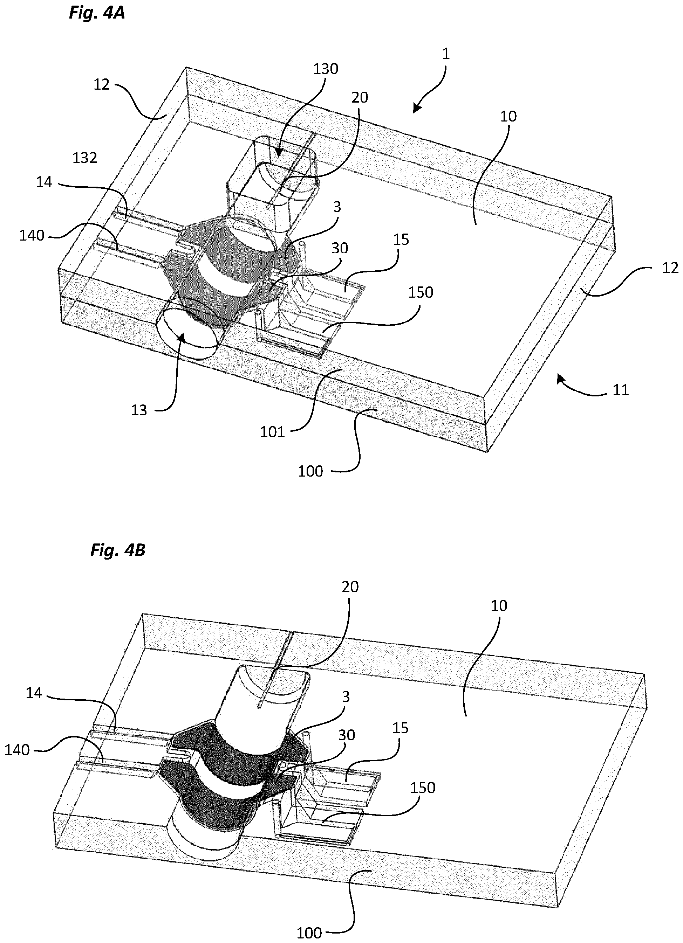

La figure 4A et la figure 4B décrivent une variante de réalisation dans laquelle l'unité de collecte U1 comporte une deuxième électrode, dite de référence. Cette électrode de référence peut être formée d'une membrane 30 identique à la membrane 3 employée pour la collecte, et positionnée de manière juxtaposée à celle-ci, tapissant le fond du canal 13 de collecte. Les deux membranes 3, 30 ne sont bien entendu pas en contact l'une avec l'autre. Un circuit fluidique indépendant, dit de référence, intégré au composant, lui est dédié. Ce circuit fluidique de référence peut comporter un deuxième canal 140 agencé en parallèle du premier canal 14 et un deuxième réceptacle 150 de collecte placé en parallèle du premier réceptacle 15. Dans cette réalisation, cette deuxième membrane 30 n'est cependant pas reliée au circuit électrique et ne fait que servir de référence par rapport au circuit principal. Le composant 1 fluidique est façonné de manière à intégrer ce circuit fluidique de référence, en parallèle du circuit fluidique d'élution de l'échantillon collecté.

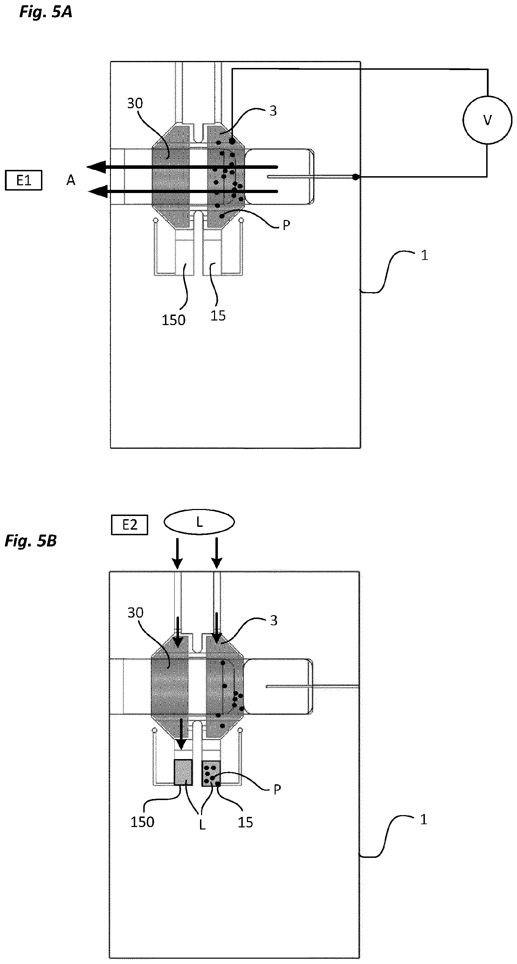

Les figures 5A et 5B illustrent le principe de fonctionnement de la variante de réalisation des figures 4A et 4B.

Sur la figure 5A, le générateur électrique V est activé pour lancer la collecte des particules P présentes dans l'air (étape E1), par création de la différence de potentiels entre l'électrode de décharge et l'électrode de collecte. L'électrode de référence n'est en revanche pas connectée au circuit électrique. Lors de la collecte, l'air A est amené à circuler à travers le canal de collecte et les particules P sont attirées par la membrane 3 par effet électrostatique. Les particules P présentes dans l'air sont ainsi précipitées sur la surface de la membrane.

Sur la figure 5B, une fois les particules P collectées sur la membrane, le générateur V est stoppé et la deuxième étape consiste à récupérer les particules P piégées par la membrane 3 (étape E2). Pour récupérer ces particules P, un liquide L est injecté dans le premier canal 14 du circuit fluidique d'élution. Le liquide L est également injecté dans le deuxième canal 140, dans le circuit fluidique de référence.

Le liquide injecté dans chaque circuit fluidique vient mouiller respectivement la membrane 3 de collecte et la membrane 30 de référence. Le liquide L est drainé par chaque membrane 3, 30 et est ensuite recueilli dans chaque réceptacle 15, 150. Du côté du circuit fluidique d'élution, le liquide entraîne les particules P qui ont été piégées dans la membrane 3 lors de l'étape E1.

Après le mouillage, si la particule ou le matériel biologique à éluer est lui-même chargé, un champ électrique peut être appliqué entre deux autres électrodes en contact avec la solution liquide de manière à faciliter l'élution des analytes.

Il faut noter que la collecte sur la membrane 3 et la récupération par élution du matériel à analyser sont réalisées de manière désynchronisée, c'est-à-dire de manière non simultanée. Le mouillage de la membrane 3 doit avoir lieu en l'absence de champ électrique entre l'électrode de décharge et l'électrode de collecte pour éviter la formation d'espèces réactives qui pourraient endommager le matériel biologique (notamment le matériel nucléique). Les décharges électriques employées dans les précipitateurs électrostatiques produisent en effet de nombreuses espèces très réactives telles que l'ozone. Or l'ozone en présence d'une solution aqueuse conduit à la formation de peroxyde d'hydrogène qui pourrait altérer les cibles à détecter. La collecte est donc réalisée à sec, l'élution des particules étant réalisée dans un deuxième temps.

Il faut également noter que lorsque la zone de collecte Z1 est réalisée sous la forme d'une micro-structure hydrophile, façonnée dans le composant 1, la zone de collecte Z1 peut être rendue conductrice (en cas de collecte électrostatique), par exemple par application d'un matériau conducteur, par exemple par enduction d'une peinture conductrice, par vaporisation d'un spray conducteur, par trempage sélectif, par application d'un film thermoformable conducteur...

L'unité d'analyse U2 des particules P collectées est également implantée dans le composant 1 employé pour la collecte ou être séparée de celui-ci. Elle est implantée dans le composant 1 pour réduire le matériel qu'un opérateur devrait manipuler et pour permettre d'automatiser le process. L'unité d'analyse U2 peut comporter une chambre de détection réalisée dans le composant 1 et destinée à recevoir l'échantillon collecté après élution. Cette chambre peut embarquer des réactifs nécessaires à l'analyse, par exemple pour mettre en œuvre une réaction d'amplification. Cette chambre de détection peut être composée du réceptacle 15 présent pour la collecte de l'échantillon après élution ou un autre réceptacle communiquant avec le réceptacle 15, via un canal fluidique. Il faut noter que le liquide L d'élution, employé pour éluer les particules collectées peut lui aussi embarquer des réactifs nécessaires à la réaction. Les réactifs peuvent être séparés en deux parties, une première partie présente dans le liquide L d'élution et une deuxième partie présente dans la chambre de détection.

L'analyse peut notamment être réalisée directement dans le réceptacle 15 de l'unité de collecte U1. Les caractéristiques de transparence du matériau de fabrication du composant 1 permettent en effet de réaliser une détection par des moyens optiques. L'échantillon à analyser peut aussi être transféré dans une autre chambre de l'unité d'analyse U2, réalisée dans le composant 1 du dispositif ou même dans une unité d'analyse séparée agencée dans un deuxième composant indépendant.

Il faut noter que le composant 1 intègre ainsi dans un seul bloc ou élément, tous les moyens nécessaires pour lancer une analyse, c'est-à-dire les moyens de collecte et les moyens d'analyse, reliés entre eux.

Comme évoqué précédemment, l'analyse peut être réalisée par amplification bimoléculaire ou être de type immuno-enzymatique (type ELISA).

Une analyse par amplification biomoléculaire de microorganismes suppose une extraction du matériel génomique des microorganismes. Trois solutions techniques peuvent être mises en œuvre :
- Entrainer les microorganismes avec une première solution qui mouille la membrane de collecte, les récupérer dans le réceptacle puis les lyser de manière mécanique ou thermique ou chimique dans celui-ci ou dans une autre chambre du dispositif.
- Mouiller la membrane avec une solution de lyse qui extrait par voie chimique le matériel génétique des microorganismes. Le liquide va alors entrainer le matériel génétique d'intérêt et celui-ci va être récupéré dans le réceptacle.
- Chauffer la membrane à une température adaptée à la lyse des microorganismes recherchés (par exemple, 65°C pendant 5 minutes). L'élution du matériel génétique peut alors être réalisée dans un second temps, vers le réceptacle.

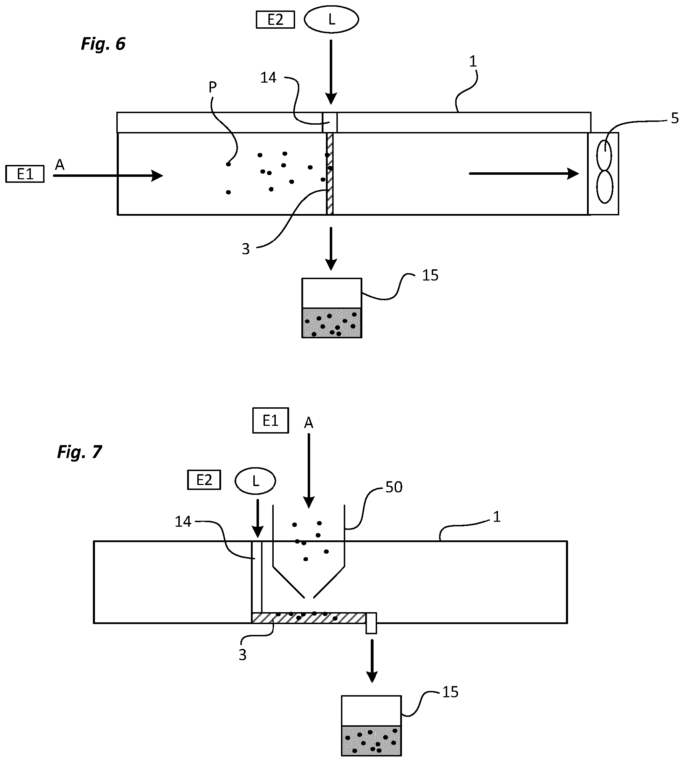

Selon une variante de réalisation illustrée par la figure 6, les moyens de collecte 2 peuvent également comporter des moyens de génération d'un flux d'air dirigé vers la zone de collecte, également réalisée sous la forme d'une membrane. Ces moyens de génération de flux d'air peuvent comporter un ventilateur 5.

Le ventilateur 5 est positionné pour générer un flux d'air A à travers la membrane 3, qui est alors agencée transversalement audit flux d'air. Le flux d'air traverse la membrane 3 et les particules P sont retenues par la membrane lors de l'étape E1. Dans cette variante, la membrane 3 peut être agencée dans un plan transversal à l'axe du canal de collecte, au niveau de son tronçon principal. Lors de l'étape E2, le liquide L est injecté par le canal 14 pour pénétrer la membrane 3 et éluer les particules P préalablement piégées par celle-ci. Comme précédemment, les deux étapes E1 et E2 ne sont pas réalisées simultanément, la collecte ayant lieu avant la récupération par élution. Dans cette variante de réalisation, le maillage de la membrane 3 est bien entendu adapté pour piéger les particules ciblées, présentes dans le flux d'air traversant.

Dans une autre variante de réalisation illustrée par la figure 7, le ventilateur 5 peut être positionné pour générer le flux d'air A à travers une buse 50 dont la sortie fait face à la membrane 3 pour venir impacter les particules P contre la membrane 3. Le système fonctionne ainsi comme un impacteur. Une fois les particules P piégées par la membrane lors de l'étape E1, le fonctionnement est ensuite identique lors de l'étape E2.

Le composant étant avantageusement autonome, il peut embarquer une unité de contrôle chargée de commander ses différentes unités.

La solution de l'invention présente ainsi de nombreux avantages, parmi lesquels :
- La réalisation d'une unité de collecte particulièrement compacte et facilement transportable ;
- La possibilité de réaliser la collecte et l'analyse dans un même composant réalisé sous une forme monobloc ;
- Une solution qui peut être entière automatisée, que ce soit au niveau de la collecte mais aussi au niveau de l'analyse ;
- Une solution qui permet de recueillir un maximum des particules collectées, notamment grâce à l'emploi d'une membrane réalisée en matériau hydrophile ;

## Revendications

1. Dispositif de collecte et d'analyse comprenant un composant monobloc intégrant une unité de collecte (U1) de particules (P) et une unité d'analyse (U2) des particules collectées, l'unité de collecte (U1) comprenant une zone de collecte (Z1) disposée sur le composant, sur laquelle viennent se déposer lesdites particules (P), des moyens de collecte configurés pour forcer lesdites particules (P) à se déposer contre la zone de collecte (Z1), un circuit fluidique d'élution agencé dans ledit composant pour éluer les particules présentes dans la zone de collecte, **caractérisé en ce que** :
- Les moyens de collecte comportent au moins un canal (13) de collecte réalisé dans le composant et comprenant une entrée et une sortie pour être traversé par un flux du gaz ou mélange de gaz contenant les particules (P), ledit canal (13) de collecte étant agencé pour traverser ladite zone de collecte (Z1),
- La zone de collecte (Z1) est réalisée dans un matériau hydrophile,
- Le circuit fluidique d'élution comporte un premier canal fluidique (14) débouchant sur la zone de collecte (Z1),
- L'unité d'analyse (2) comporte une chambre de détection intégrée dans ledit composant (1), et agencée pour recueillir un liquide drainé par la zone de collecte (Z1) lors de l'élution.

2. Dispositif selon la revendication 1, **caractérisée en ce que** la zone de collecte (Z1) est réalisée sur une membrane (3) indépendante réalisée dans ledit matériau hydrophile, déposée sur une surface du composant.

3. Dispositif selon la revendication 2, **caractérisée en ce que** la membrane (3) est réalisée dans un matériau à base de cellulose.

4. Dispositif selon la revendication 2, **caractérisée en ce que** la membrane (3) est réalisée dans un matériau de type tissu.

5. Dispositif selon l'une des revendications 2 à 4, **caractérisée en ce que** les moyens de collecte sont de type électrostatique et comprennent une électrode de décharge (20) et une électrode de collecte, et **en ce que** la membrane (3) est traitée pour être rendue conductrice de l'électricité et former ladite électrode de collecte.

6. Dispositif selon la revendication 5, **caractérisée en ce que** la membrane (3) est agencée pour tapisser au moins partiellement la paroi interne du canal (13) de collecte.

7. Dispositif selon la revendication 5 ou 6, **caractérisée en ce que** l'électrode de décharge est formée d'une pointe s'étendant dans l'axe dudit canal (13) de collecte.

8. Dispositif selon l'une des revendications 1 à 7, **caractérisée en ce que** la zone de collecte (Z1) est recouverte d'un matériau hydrosoluble.

9. Dispositif selon l'une des revendications 2 à 4, **caractérisée en ce que** les moyens de collecte (2) comportent une unité de génération d'un flux du gaz ou mélange de gaz et **en ce que** la membrane (3) est agencée dans un plan transversal au flux de gaz ou mélange de gaz pour piéger les particules.

10. Dispositif selon l'une des revendications 2 à 4, **caractérisée en ce que** les moyens de collecte (2) comportent une unité de génération d'un flux du gaz ou mélange de gaz à travers une buse (50) et **en ce que** la membrane (3) est agencée en vis-à-vis de la buse (50) pour collecter les particules (P) par impaction.

11. Dispositif selon l'une des revendications 1 à 10, **caractérisé en ce que** la chambre de détection embarque des réactifs adaptés à la mise en œuvre d'une analyse.

12. Procédé de collecte et d'analyse de particules (P) présentes dans un aérosol, **caractérisé en ce qu'**il est mis en œuvre à l'aide du dispositif tel que défini dans l'une des revendications 1 à 11 et **en ce qu'**il comporte :
- Une étape de collecte des particules réalisée dans la zone de collecte (Z1) de ladite unité de collecte (U1),
- Une étape d'élution par injection d'un liquide dans le circuit fluidique d'élution, pour éluer les particules piégées dans la zone de collecte (Z1) lors de l'étape de collecte,
- Une étape de récupération du liquide drainé par la zone de collecte (Z1) dans l'unité fluidique (U10) de récupération,
- Une étape d'analyse des particules dans l'unité d'analyse (U2).
